# EUROPEAN PATENT SPECIFICATION

(11) **EP 3 525 191 B1**
(45) Date of publication and mention of the grant of the patent: **24.07.2024**
(21) Application number: 19151560.0
(22) Date of filing: 14.01.2019
(51) Int. Cl.: G08G 1/0967, B60W 40/09, G01C 21/34, G08G 1/16, B60W 50/00, B60W 60/00

(54) **AUTONOMOUS DRIVING ASSISTANCE APPARATUS AND METHOD THEREFOR**
ASSISTENZVORRICHTUNG FÜR AUTONOMES FAHREN UND VERFAHREN DAFÜR
APPAREIL D'ASSISTANCE À LA CONDUITE AUTONOME ET PROCÉDÉ ASSOCIÉ

(30) Priority: 31.01.2018 JP 2018016037
(43) Date of publication of application: 14.08.2019
(73) Proprietor: Hitachi, Ltd., Tokyo 100-8280 (JP)
(72) Inventor: Lin, Tao, Tokyo, 100-8280 (JP); Mashimo, Daisuke, Tokyo, 100-8280 (JP); Nomura, Takashi, Tokyo, 100-8280 (JP); Higashi, Takamasa, Tokyo, 100-8280 (JP)
(74) Representative: Manitz Finsterwald Patent- und Rechtsanwaltspartnerschaft mbB

(56) References cited:
- WO-A1-2016/158197
- JP-A- 2012 051 441
- US-A1- 2013 211 656

## Description

### TECHNICAL FIELD

The present invention relates to an autonomous driving assistance apparatus and method for assisting autonomous driving traveling by using sensor information, map information, and so on.

### BACKGROUND ART

In recent years, expectations on autonomous driving vehicles have been being raised in order to realize safe and secure traffic society. The autonomous driving vehicles realize autonomous driving traveling without a user's control by having mutual cooperation between a peripheral status recognition function using, for example, sensor information and map information, a control method judgment function according to recognition information, and a vehicle operation function based on judgment information and executing processing successively and continuously. Such autonomous driving traveling can expect a significant reduction of traffic accidents, a majority of which are caused by human errors.

However, when an autonomous driving vehicle travels on a road, it is necessary to determine a control method in consideration of various conditions such as a road shape, a traffic volume, weather, time of day, and map information. Meanwhile, there are enormous combinations of such conditions from time to time and it is very difficult to equip the autonomous driving vehicle with a judgment function capable of dealing with any and all situations at the same level as that of driving by the user. When the above-mentioned autonomous driving vehicle enters a state incapable of making judgments where the judgment function cannot determine the control method with respect to recognition information which has been entered, the autonomous driving traveling will be cancelled and the vehicle will be stopped, or a control authority will be transferred to the user while the vehicle is running. Furthermore, the cancellation of the autonomous driving traveling by the user may be required when the judgment function is stopped in a situation which is not expected by the user. Such cancellation of the autonomous driving traveling which is not expected by the user causes degradation of an autonomous driving traveling function with respect to duration and a target area. Accordingly, there is a demand for reduction of the cancellation of the autonomous driving traveling for the autonomous driving vehicle.

Regarding the conventional art relating to the reduction of opportunities to cancel the autonomous driving traveling for autonomous driving vehicles, PTL 1 discloses a technique that: when searching for a recommended route for traveling by the autonomous driving control, acquires information about placement of limited planimetric features which are planimetric features that prompt the vehicle to be decelerated or stopped while the vehicle travels by manual driving by the user; identifies a target road for which the vehicle is required to be decelerated or stopped; and prioritizes in searching for a route by avoiding the target road. PTL 2 discloses a technique that shares traveling history, behavior history, and image recognition information of the autonomous driving vehicle via a cloud, determines a recommended route and behaviors based on these pieces of information, and performs driving assistance by, for example, autonomous driving traveling.

### CITATION LIST

### PATENT LITERATURE

PTL 1: Japanese Patent Application Laid-Open (Kokai) Publication No. 2017-41038
PTL 2: Japanese Patent Application Laid-Open (Kokai) Publication No. 2011-145756 JP 2012051441 A1 discloses an automatic driving control apparatus maintaining a database storing surrounding environment information and vehicle information when a driver override of automatic driving is detected.
US 2013/0211656 A1 discloses an autonomous driving method in which reliable path sections are determined and autonomous driving control is made when a vehicle is in a reliable path section.

### PROBLEMS TO BE SOLVED BY THE INVENTION

PTL 1 sets a route in advance, which avoids points requiring stop and deceleration control with a high probability of cancellation of the autonomous driving traveling; however, PTL1 cannot reduce the occurrence of the cancellation which is not expected (or assumed) by the user at points other than the points where the limited planimetric features are located. Furthermore, PTL 2 determines a traveling method based on history information with the latest time stamp; however, the history information which is considered to be the latest is not always the same as the situation at a point in time when using that information, so that PTL2 cannot reduce the occurrence of the cancellation which is not expected (or assumed) by the user particularly at roads with a small traffic volume.

### SUMMARY OF THE INVENTION

It is the object of the invention to provide an autonomous driving assistance apparatus and method capable of reducing the number of unexpected cancellations of the autonomous driving traveling.

### MEANS TO SOLVE THE PROBLEMS

The above-mentioned object is accomplished by the features of the independent claims.

An autonomous driving assistance apparatus according to claim 1.

### ADVANTAGEOUS EFFECTS OF THE INVENTION

The cancellation of the autonomous driving traveling, which is not expected by the user, can be reduced according to the present invention.

Problems, configurations, and advantageous effects other than those described above will be made clear through a description of embodiments bellow.

### BRIEF DESCRIPTION OF DRAWINGS

Fig. 1 is a configuration diagram of an autonomous driving system according to Embodiment 1 of the present invention;
Fig. 2 is a physical configuration diagram of an autonomous driving control apparatus according to Embodiment 1 of the present invention;
Fig. 3 is an explanatory diagram of a status information table stored in an experience information database of the autonomous driving control apparatus according to Embodiment 1 of the present invention;
Fig. 4 is an explanatory diagram of an experience information table stored in the experience information database of the autonomous driving control apparatus according to Embodiment 1 of the present invention;
Fig. 5 is a flowchart of autonomous driving control processing of the autonomous driving system according to Embodiment 1 of the present invention;
Fig. 6 is a flowchart of experience information registration processing of the autonomous driving system according to Embodiment 1 of the present invention;
Fig. 7 is an explanatory diagram of a traveling method of an autonomous driving vehicle according to Embodiment 1 of the present invention;
Fig. 8 is a configuration diagram of an autonomous driving system according to Embodiment 2 of the present invention;
Fig. 9 is an explanatory diagram of an experience information table stored in an experience information database of a data center according to Embodiment 2 of the present invention;
Fig. 10 is a flowchart of autonomous driving control processing of the autonomous driving system according to Embodiment 2 of the present invention; and
Fig. 11 is a flowchart of experience information registration processing of the autonomous driving system according to Embodiment 2 of the present invention.

### DESCRIPTION OF EMBODIMENTS

The following embodiments will be explained with reference to the drawings.

### (Embodiment 1)

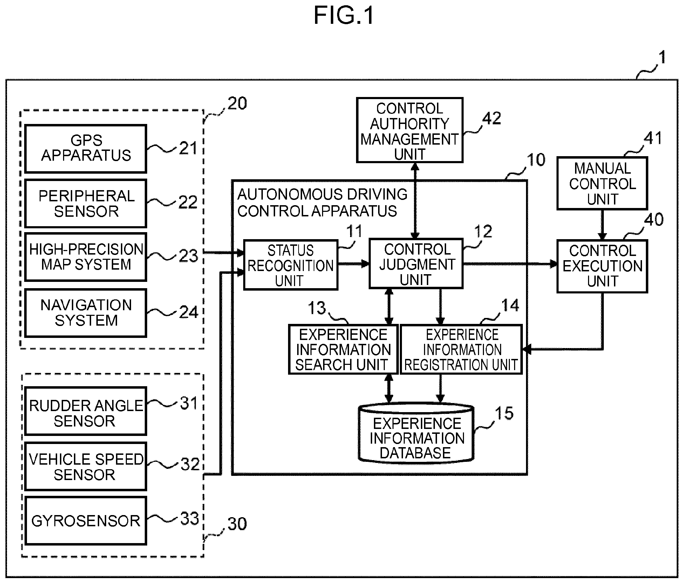

Embodiment 1 of the present invention will be explained with reference to Fig. 1 to Fig. 7. Fig. 1 is a configuration diagram of an autonomous driving system according to Embodiment 1.

Referring to Fig. 1, the autonomous driving system according to this embodiment can provide autonomous driving traveling by an autonomous driving control apparatus 10, which exists in an autonomous driving vehicle (hereinafter sometimes simply referred to as a driver's vehicle) 1 executing status recognition processing for calculating information about a peripheral status including the driver's vehicle 1 (status recognition information) based on input information from a sensor map information group 20 and vehicle motion information group 30 and control method judgment processing for determining a control method for safely traveling along a route based on the status recognition information, notifying a control execution unit 40 of the determined control method, and executing a vehicle operation based on the control method reported to the control execution unit 40.

The autonomous driving control apparatus 10 includes a status recognition unit 11, a control judgment unit 12, an experience information search unit 13, an experience information registration unit 14, and an experience information database 15.

The status recognition unit 11: periodically receive a plurality of pieces of information from the sensor map information group 20 for generating sensor information and map information, including a GPS (Global Positioning System) apparatus 21, a peripheral sensor 22 such as a laser and a camera, a high-precision map system 23, and a navigation system 24, and the vehicle motion information group 30 for generating vehicle motion information, including a rudder angle sensor 31 for detecting a rudder angle, a vehicle speed sensor 32 for detecting a vehicle speed, and a gyrosensor 33 for detecting an angular velocity; executes status recognition processing for calculating information about the peripheral status including the status of the driver's vehicle 1 by integrating the respective pieces of the received information; and notifies the control judgment unit 12 of the calculated information as status recognition information. Specifically speaking, the status recognition unit 11 collects the information about the peripheral status of the driver's vehicle 1 including the status of the driver's vehicle 1 from the plurality of sensors and outputs the collected information as the status recognition information to the control judgment unit 12. Incidentally, the high-precision map system 23 stores the map information recorded to a lane level.

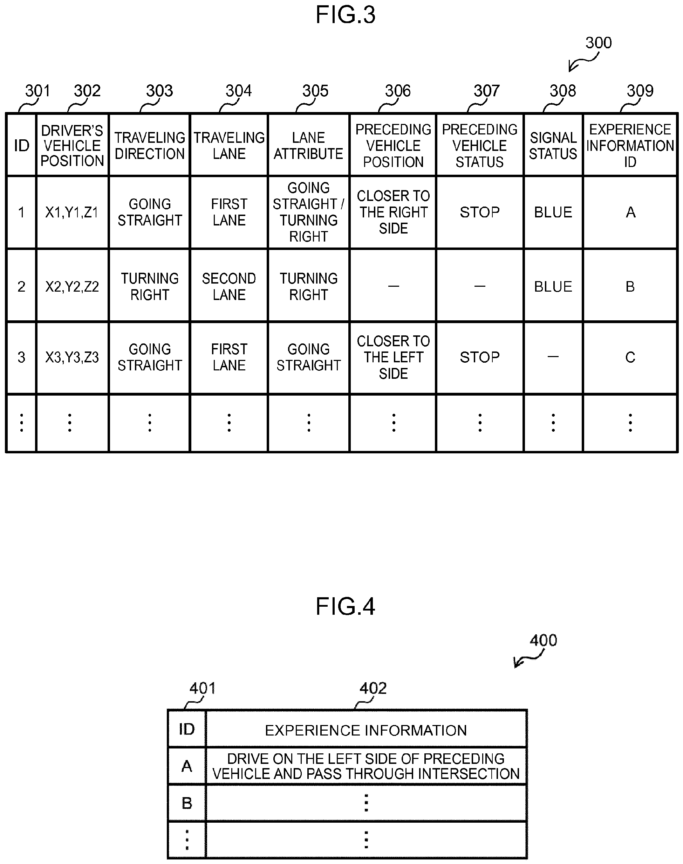

The control judgment unit 12 has a function that determines the control method for safely traveling along a route based on the status recognition information received from the status recognition unit 11 and notifies the control execution unit 40 of information about the determined control method as control method information. After the control judgment unit 12 receives the status recognition information, the experience information search unit 13 extracts the status information, which is a search key for searching tables (a status information table 300 in Fig. 3 and an experience information table 400 in Fig. 4) stored in the experience information database 15 for the experience information, from the received status recognition information and notifies the experience information search unit 13 of the extracted status information.

Then, when an entry regarding the corresponding experience information exists in the status information table 300 as a result of the search of the status information table 300 by the experience information search unit 13 by using the received status information as the search key, the control judgment unit 12 receives and retains the experience information recorded in an entry from among entries of the experience information table 400, which corresponds to the entry of the status information table 300, from the experience information search unit 13. This experience information is the information about the control method for traveling along a route between some two points.

On the other hand, when no entry regarding the relevant experience information exists in the status information table 300 as the result of the search of the status information table 300 by the experience information search unit 13 by using the received status information as the search key, the experience information search unit 13 notifies the control judgment unit 12 that no entry regarding the relevant experience information exists in the status information table 300.

Then, the control judgment unit 12: judges whether the control method can be calculated or not, in accordance with the control method judgment processing using the status recognition information and the retained experience information as input information; and then notifies the control execution unit 40 of the information about the control method calculated in accordance with the control method judgment processing as the control method information on condition that the control method can be calculated. Under this circumstance, when the retained experience information is information indicating that the driver's vehicle position is off a target route, the control judgment unit 12 deletes that experience information. When the control method cannot be calculated (or determined) by the control method judgment processing, the control judgment unit 12 notifies the control authority management unit 42 of transfer of a control authority to the user and cancels the autonomous driving traveling. Specifically speaking, the control judgment unit 12 judges whether the autonomous driving traveling is possible or not, based on at least the experience information extracted by the experience information search unit 13; and if the autonomous driving traveling is impossible, the control judgment unit 12 cancels the autonomous driving traveling; and if the autonomous driving traveling is possible, the control judgment unit 12 calculates the control method for the autonomous driving traveling based on the experience information extracted by the experience information search unit 13 and outputs the control method information about the calculated control method to the control execution unit 40.

Furthermore, when the control judgment unit 12 cannot calculates the control method in accordance with the control method judgment processing and cancels the autonomous driving traveling or when the control execution unit 40 executes stop control based on the control method information reported by the control judgment unit 12, and the control judgment unit 12 is notified by the control authority management unit 42 of a request for the transfer of the control authority from the user and cancels the autonomous driving traveling, the control judgment unit 12 has a function that determines to make a transition to an experience information registration state to add an entry/entries to the status information table 300 and the experience information table 400 which are stored in the experience information database 15. Once the control judgment unit 12 determines to make the transition to the experience information registration state (or to make the transition to manual driving traveling), it notifies the control execution unit 40 of the start of registration of the experience information and also notifies the experience information registration unit 14 of the status information which serves as the search key of the experience information search unit 13 based on the status recognition information received from the status recognition unit 11. Furthermore, when the control method judgment processing using, as input, the status recognition information received from the status recognition unit 11 in the experience information registration state makes it possible to calculate the control method information (or makes it possible to make the transition from the manual driving traveling to the autonomous driving traveling), the control judgment unit 12 determines to terminate the experience information registration state (or resume the autonomous driving traveling) and notifies the control execution unit 40, the experience information registration unit 14, and the control authority management unit 42 of the determined content.

Furthermore, when the control judgment unit 12 is notified by the control authority management unit 42 of cancellation of the autonomous driving traveling by the user while the control execution unit 40 is executing the vehicle operation (or implementing the autonomous driving traveling) based on the control method (the control method information) determined by the control judgment unit 12 by using the experience information acquired from the experience information database 15, the control judgment unit 12 notifies the experience information registration unit 14 of deletion of an entry corresponding to the control method information in the experience information database 15. Since notification of the cancellation of the autonomous driving traveling by the user means that a driving method during the autonomous driving traveling is not the driving method intended by the user (or driver), the control judgment unit 12 notifies the experience information registration unit 14 of deletion of the used experience information.

The experience information search unit 13 has a function that searches the status information table 300 and the experience information table 400, which are stored in the experience information database 15, for the experience information by using the status information received from the control judgment unit 12 as the search key and notifies the control judgment unit 12 of the relevant experience information if the corresponding entries exist in the status information table 300 and the experience information table 400.

The experience information registration unit 14 has a function that registers and deletes a new entry to the status information table 300 and the experience information table 400 which are stored in the experience information database 15. When the control judgment unit 12 determines to start registering the experience information and the experience information registration unit 14 receives the same status information as the status information, which is reported by the control judgment unit 12 to the experience information search unit 13, the experience information registration unit 14 retains such received status information and also retains the control method information received from the control execution unit 40 (the control method information based on operation information) by associating the control method information with the above-mentioned status information; and after receiving notification of termination of the experience information registration state from the control judgment unit 12, the experience information registration unit 14 creates experience information, which is the control method for traveling the route between the two points, from the retained control method information and registers the status information in the status information table 300 and the experience information in the experience information table 400, respectively, by associating the status information with the experience information.

Specifically speaking, when managing the information stored in the experience information database 15, the experience information registration unit 14 registers information, which is obtained from the operation information output from the manual control unit 41 and is the experience information indicative of the control method used during the manual driving traveling when the driver's vehicle 1 travels along the route, in the experience information database 15 by associating such experience information with the status information during a period of time after the control judgment unit 12 cancels the autonomous driving traveling (when the control judgment unit 12 determines to start registering the experience information) until it then judges that the autonomous driving traveling is possible (until the control judgment unit 12 judges that the experience information registration state should be terminated). Furthermore, when receiving notification from the control judgment unit 12 to delete of an entry/entries in the experience information database 15, the experience information registration unit 14 executes the deletion of the entry/entries in the experience information database 15 in accordance with the notification.

The experience information database 15 is a database which stores the status information table 300 and the experience information table 400.

The control execution unit 40 implements the autonomous driving traveling by operating the driver's vehicle 1 based on the control method information received from the control judgment unit 12 and the operation information received from the manual control unit 41. Furthermore, when the control execution unit 40 is notified by the control judgment unit 12 of the start of registration of the experience information, it outputs the control method information based on the operation information received from the manual control unit 41 (which is the information obtained from the operation information and including the experience information indicative of the control method used during the manual driving traveling when the driver's vehicle 1 travels along the route) to the experience information registration unit 14; and when the control execution unit 40 is notified by the control judgment unit 12 of termination of the experience information registration state, it stops outputting the control method information.

The manual control unit 41 notifies the control execution unit 40 of the operation information based on manual operation of, for example, a steering wheel and an accelerator/brake by the user (the operation information during the manual driving traveling when the autonomous driving traveling of the driver's vehicle 1 is canceled).

The control authority management unit 42 has a function that notifies the control judgment unit 12 of a request from the user to start or cancel the autonomous driving traveling and notifies the user of cancellation of the autonomous driving in response to a request from the control judgment unit 12.

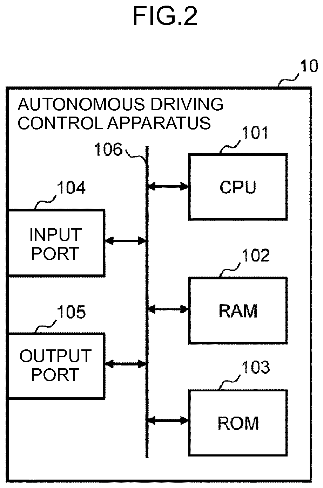

Fig. 2 is a physical configuration diagram of the autonomous driving control apparatus 10. Referring to Fig. 2, the autonomous driving control apparatus 10 is composed of a CPU (Central Processing Unit) 101, a RAM (Random Access Memory) 102, a ROM (Read Only Memory) 103, an input port 104, an output port 105, and a bus 106 for coupling the above-mentioned components. The CPU 101 is configured as a central processing unit that controls the operation of the entire apparatus in an integrated manner. The RAM 102 is configured as a storage area for temporarily storing processing results of the CPU 101. The ROM 103 is configured as a storage area for storing processing programs of the CPU 101 and data. Under this circumstance, the ROM 103 stores, for example, a status recognition program, a control judgment program, an experience information search program, and an experience information registration program (none of which are illustrated in the drawing) as the processing programs and also stores the experience information database 15 as the database. As the CPU 101 executes the status recognition program, the control judgment program, the experience information search program, and the experience information registration program, respectively, the functions of the status recognition unit 11, the control judgment unit 12, the experience information search unit 13, and the experience information registration unit 14 are implemented.

The input port 104 is configured as an input interface and is coupled to the sensor map information group 20 and the vehicle driving information group 30. The output port 10 is configured as an output interface and is coupled to a control apparatus (which is not illustrated in the drawing) including the control execution unit 40, the manual control unit 41, and the control authority management unit 42. This control apparatus is configured just like the autonomous driving control apparatus 10 by including a CPU, a RAM, a ROM, an input port, and output port (none of which are illustrated in the drawing). Under this circumstance, as the CPU executes a control execution program, a manual control program, and a control authority management program (none of which are illustrated in the drawing), respectively, as processing programs which are stored in the ROM, the functions of the control execution unit 40, the manual control unit 41, and the control authority management unit 42 are implemented.

Fig. 3 is a structure diagram illustrating a structure example of the status information table 300. Referring to Fig. 3, the status information table 300 includes an ID 301, a driver's vehicle position 302, a traveling direction 303, a traveling lane 304, a lane attribute 305, a preceding vehicle position 306, a preceding vehicle status 307, a signal status 308, and an experience information ID 309. The ID 301 is where an ID (identification) for identifying the relevant entry is registered. The driver's vehicle position 302 to the signal status 308 correspond to the status information which is reported by the control judgment unit 12 to the experience information search unit 13 and which is information indicative of the peripheral status when the cancellation of the autonomous driving traveling occurs.

The experience information search unit 13 specifies the relevant experience information ID 309 by using these pieces of information as keys. The driver's vehicle position 302 is where information such as coordinates indicative of a geographical position of the driver's vehicle 1 is registered. In an example where the ID 301 is "1," the driver's vehicle position 302 is indicated as "X1, Y1, Z1." The traveling direction 303 is where information indicative of a traveling direction of the driver's vehicle 1 at the relevant position is registered. In the example where the ID 301 is "1," the traveling direction 303 is indicated as going straight. Other states of the traveling direction 303 include, for example, "turning right " and "turning left." The traveling lane 304 is where information indicative of a traveling lane of the relevant road is registered. For example, lanes are expressed as a "first lane" and a "second lane" in a sequential order from the lane located at the leftmost position relative to the traveling direction of the driver's vehicle 1. The lane attribute 305 is where information indicative of one or more permitted attributes from among the traveling attributes such as going straight, turning right, and turning left is registered with respect to the traveling lane.

The preceding vehicle position 306 is where information about a relative position of a preceding vehicle relative to the driver's vehicle 1 is registered. The preceding vehicle position 306 includes states such as "closer to the right side," "closer to the left side," "in front," and "none." The preceding vehicle status 307 is where information about a traveling status of the preceding vehicle is registered. The preceding vehicle status 307 includes states such as "stop," "traveling," and "decelerating." The signal status 308 is where information about a color indicated by a signal recognized at the relevant position is registered. Regarding other examples of the status information, weather and time of day may be included. Furthermore, not all items of the status information should always have values in their entries. By defining the status in detail based on these plurality of pieces of information, it is possible to reduce the opportunities to implement the autonomous driving traveling which unnecessarily uses the experience information and to suppress the user's uncomfortable feeling.

Next, a structure example of the experience information table 400 is shown in Fig. 4. Referring to Fig. 4, the experience information table 400 includes an ID 401 and experience information 402. The ID 401 is an ID for identifying the relevant entry and corresponds to the experience information ID 309 of the status information table 300. Furthermore, the experience information 402 is information about the control method of the driver's vehicle 1; and a result of a search by the experience information search unit 13 by using the status information as a key, this information is reported to the control judgment unit 12. For example, information such as "drive on the left side of the preceding vehicle and pass through intersection" and "change the lane to the second lane, pass through the intersection, and then return to the first lane" is registered.

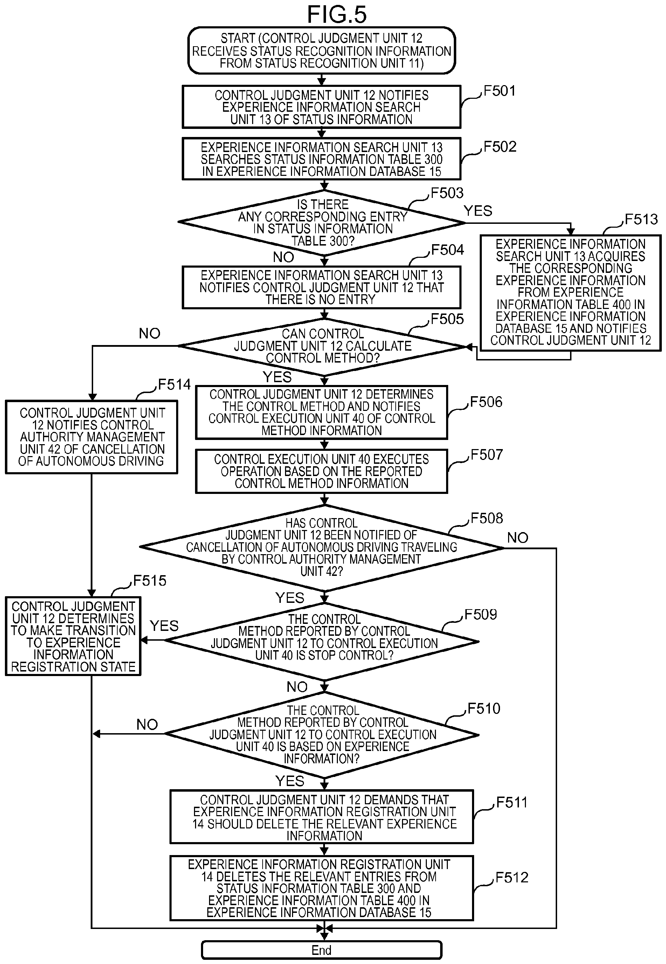

Processing of the driver's vehicle 1 in a normal state where the driver's vehicle 1 implements the autonomous driving traveling when the control judgment unit 12 receives the status recognition information which is periodically output from the status recognition unit 11 will be explained below in accordance with a flowchart illustrated in Fig. 5.

When the control judgment unit 12 firstly receives the status recognition information calculated by the status recognition unit 11 based on the information from the sensor map information group 20 and the vehicle motion information group 30, the control judgment unit 12 extracts the status information, which the experience information search unit 13 requires as the search key, from the received status recognition information and notifies the experience information search unit 13 of the extracted status information (F501). Having received the status information, the experience information search unit 13 searches the status information table 300 in the experience information database 15 by using the status information as the search key (F502) and judges whether there is any corresponding entry in the status information table 300 or not (F503). Regarding the judgment on whether there is any corresponding entry or not under this circumstance, it may be judged that there is a corresponding entry even when only some of the plurality of pieces of the status information, which serves as the search key, matches the information of the relevant entry. Furthermore, it may be judged that, for example, the driver's vehicle position 302 among the status information matches the information of the relevant entry if it is within a predefined range of error.

If it is judged in step F503 that there is no corresponding entry, the experience information search unit 13: notifies the control judgment unit 12 that there is no corresponding entry in the status information table 300 (F504); and then proceeds to processing of step F505. On the other hand, if it is judged in step F503 that there is a corresponding entry, the experience information search unit 13 acquires the corresponding experience information 402 from the experience information table 400 in the experience information database 15 by using the experience information ID 309 of the relevant entry as the search key and notifies the control judgment unit 12 of the acquired experience information 402 (F513). The control judgment unit 12 retains the received experience information 402.

Next, the control judgment unit 12 judges whether the control method can be calculated or not by executing control method judgment processing by using the status recognition information received from the status recognition unit 11 and the retained experience information (when it is retained) (F505). If it is judged in step F505 that the control method can be calculated, the control judgment unit 12 determines the control method obtained by the control method judgment processing and notifies the control execution unit 40 of information about the determined control method as the control method information (F506). The control execution unit 40 executes the operation of the driver's vehicle 1 in accordance with the reported control method information (F507). Under this circumstance, when the driver's vehicle position indicated by the experience information retained by the control judgment unit 12 is off the route, the control execution unit 40 deletes the relevant experience information (F505, F506).

On the other hand, if the control judgment unit 12 cannot calculate the control method when executing the control method judgment processing, that is, if it is judged in step F505 that the control method cannot be calculated, the control judgment unit 12 notifies the control authority management unit 42 of cancellation of the autonomous driving (cancellation of the autonomous driving traveling) or transfer of the control authority (F514), then determines to make the transition to the experience information registration state (F515), and terminates the processing in this routine. Incidentally, the processing of the experience information registration state will be described later.

Furthermore, after the operation of the driver's vehicle 1 is executed in step F507, the control judgment unit 12 judges whether or not it has been notified by the control authority management unit 42 of the cancellation of the autonomous driving traveling (F508). If the control judgment unit 12 judges in step F508 that it has been notified by the control authority management unit 42 of the cancellation of the autonomous driving traveling, the control judgment unit 12 judges whether the control method reported to the control execution unit 40 (the control method information) is stop control or not (F509); and if the control judgment unit 12 judges in step F508 that it has not been notified by the control authority management unit 42 of the cancellation of the autonomous driving traveling, the control judgment unit 12 terminates the processing in this routine.

If the control judgment unit 12 judges in step F509 that the control method reported to the control execution unit 40 is the stop control, it proceeds to step F515 and determines to make the transition to the experience information registration state (F515); and if the control judgment unit 12 judges in step F509 that the control method reported to the control execution unit 40 is not the stop control, the control judgment unit 12 judges whether the control method reported to the control execution unit 40 (the control method information) is based on the experience information or not (F510).

If the control judgment unit 12 judges in step F510 that the control method reported to the control execution unit 40 (the control method information) is not based on the experience information, it terminates the processing in this routine; and if the control judgment unit 12 judges in step F510 that the control method reported to the control execution unit 40 (the control method information) is based on the experience information, it requests that the experience information registration unit 14 should delete the relevant experience information (F511). Specifically speaking, if the control judgment unit 12 has been notified by the control authority management unit 42 of the cancellation of the autonomous driving traveling in response to the user's request (F508), if the control method then reported by the control judgment unit 12 to the control execution unit 40 is not the stop control (F509), and if the reported control method is based on the experience information (F510), that means the driving method is not what is intended by the user (driver), so that the control judgment unit 12 requests that the experience information registration unit 14 should delete the used experience information (F511).

Having received this request, the experience information registration unit 14 deletes the relevant entries from the status information table 300 and the experience information table 400 in the experience information database 15 (F512) and terminates the processing in this routine.

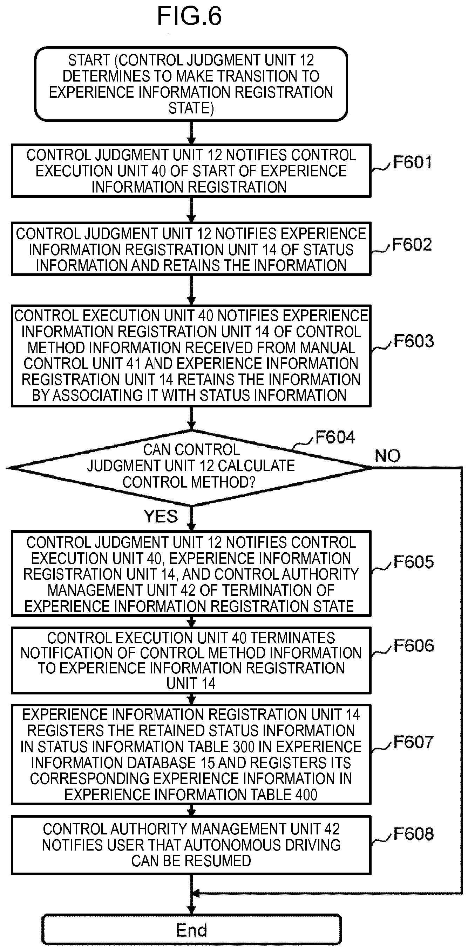

Next, processing of the autonomous driving control apparatus 10 when the control judgment unit 12 determines to make the transition to the experience information registration state will be explained below in accordance with a flowchart illustrated in Fig. 6.

When the control judgment unit 12 firstly determines to make the transition to the experience information registration state, the control judgment unit 12 notifies the control execution unit 40 of start of registration of the experience information (F601). Then, when the control judgment unit 12 notifies the experience information registration unit 14 of the retained status information, the experience information registration unit 14 retains that information (status information) (F602). Furthermore, the control execution unit 40 notifies the experience information registration unit 14 of the control method information received from the manual control unit 41 (the control method information based on the operation information) and the experience information registration unit 14 retains that information (the control method information) by associating it with the status information (the retained status information) (F603).

Under this circumstance, the control judgment unit 12 judges whether the control method can be calculated or not, based on the status recognition information received from the status recognition unit 11 (F604); and if the control judgment unit 12 judges that the control method cannot be calculated, it terminates the processing in this routine; and if the control judgment unit 12 judges that the control method can be calculated, it notifies the control execution unit 40, the experience information registration unit 14, and the control authority management unit 42 of termination of the experience information registration state (F605). Consequently, the control execution unit 40 stops notifying the experience information registration unit 14 of the control method information (the control method information based on the operation information) (F606) and the experience information registration unit 14 registers the retained status information, as a new entry, in the status information table 300 in the experience information database 15. Furthermore, the experience information registration unit 14 creates experience information, which is the control method for traveling along a route between two points, from the retained control method and registers the created experience information in the experience information table 400 so that such created experience information will correspond to the status information registered in the status information table 300 (F607). Then, the control authority management unit 42: notifies the user that the autonomous driving can be resumed (F608); and terminates the processing in this routine. As a result, the normal state is regained and the autonomous driving traveling will be implemented.

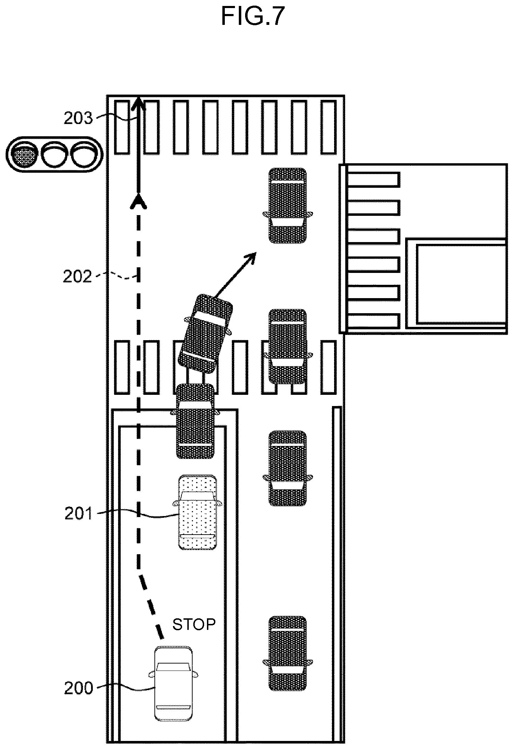

A traveling method example of an autonomous driving vehicle implemented by the processing in the normal state and the experience information registration state described in this embodiment will be explained with reference to Fig. 7. This example is based on an assumption that in a state where a vehicle 201 which is going to turn to the right stops in front of an autonomous driving vehicle 200 near a T-shaped intersection with one lane on one side of a road, the autonomous driving vehicle 200 having the same function as the driver's vehicle 1 becomes unable to perform calculation of the control method by the control judgment unit 12 at a stop position and the cancellation of the autonomous driving traveling has occurred. Then, the autonomous driving vehicle 200 enters the experience information registration state and retains the status information at that point in time. For example, the status information of the driver's vehicle position 302 to the signal status 308 is retained just like the entry where the ID 301 of the status information table 300 is "1" as illustrated in Fig. 3. Then, it is assumed that as a result of the transfer of the control authority to the user, the autonomous driving vehicle 200 travels by manual driving along a route indicated by a manual traveling route 202 by means of manual control. While the autonomous driving vehicle 200 travels along this manual traveling route 202 (during the manual driving traveling), the control method information created by the manual control is accumulated. Subsequently, when the control judgment unit 12 judges at a start point of an autonomous traveling route 203 that the control method can be calculated, it terminates the experience information registration state, registers the retained status information and experience information in the experience information database 15, and resumes the autonomous driving traveling in accordance with the autonomous traveling route 203.

When the autonomous driving vehicle 200 subsequently faces the same situation, it can continue the autonomous driving traveling by using the experience information registered in the experience information database 15 even when traveling the route which used to be the manual traveling route 202 before. As a result, it is possible to reduce the cancellation (cancellation of the autonomous driving traveling) which is not expected (or assumed) by the user. Besides this example, the experience information is registered, for example, when it becomes impossible to calculate the control method due to whether conditions or influence of obstacles or failures of the sensor(s), or when the user cancels the autonomous driving in order to avoid part of a lane (for example, a lamp side) where the traffic is congested on a road in which a plurality of lanes exist.

This embodiment is designed so that the control method which is obtained from the operation information during the manual driving traveling and is intended by the user is accumulated as the experience information in the experience information database 15 during a period of time after the occurrence of the cancellation of the autonomous driving traveling until the autonomous driving traveling is resumed. So, the occurrence of cancellation of the autonomous driving traveling which is not expected by the user can be reduced without limitations on the target route; and as a result, stable autonomous driving traveling can be realized. Moreover, as the information indicative of the lane-based position of the driver's vehicle 1 is stored as the status information in the experience information database 15, the status information regarding the lane where the vehicle actually traveled during the manual driving traveling can be managed by associating it with the experience information. Furthermore, as the information about the preceding vehicle ahead of the driver's vehicle 1 and about the preceding vehicle position indicative of a relative position of the preceding vehicle relative to the driver's vehicle 1 and information about the preceding vehicle status indicative of a traveling status of the preceding vehicle are respectively stored as the status information in the experience information database 15, the status information about the preceding vehicle when the driver's vehicle 1 actually traveled during the manual driving traveling can be managed by associating it with the experience information. Furthermore, the speed for accessing the experience information database 15 can be increased by mounting the experience information database 15 in the driver's vehicle 1 for implementing the autonomous driving traveling.

### (Embodiment 2)

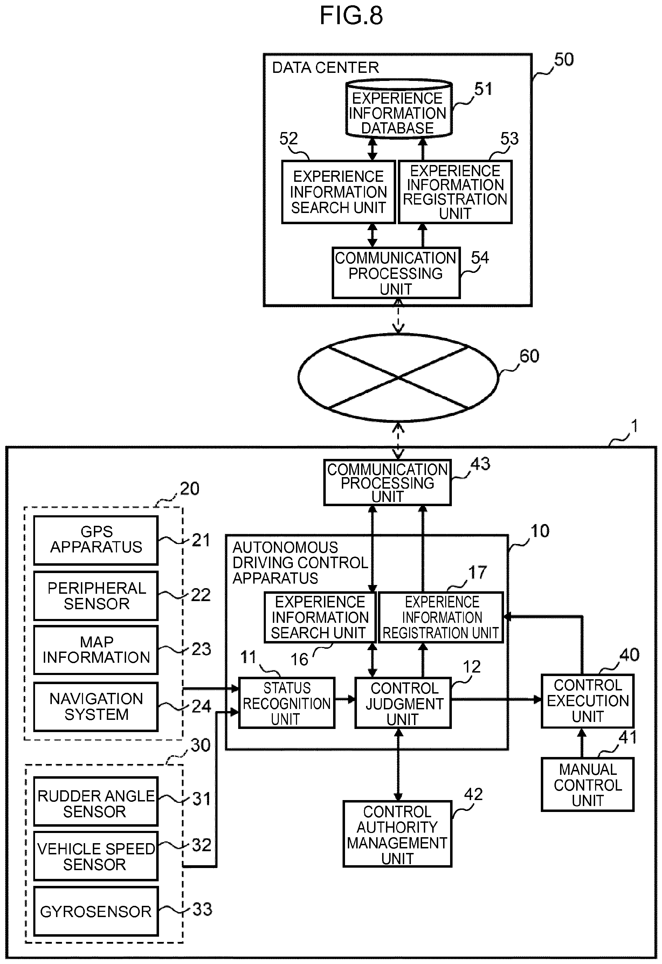

Embodiment 2 of the present invention will be explained with reference to Fig. 8 to Fig. 11. Its feature which is the difference from Embodiment 1 is that the experience information database is set not within the autonomous driving vehicle, but at a data center and the autonomous driving traveling is implemented while the autonomous driving vehicle communicates with the data center.

Fig. 8 is a configuration diagram of an autonomous driving system according to this embodiment. This autonomous driving system includes, in addition to the system configuration of Embodiment 1, a communication network 60, a data center 50 including an experience information database 51, an experience information search unit 52, an experience information registration unit 53, and a communication processing unit 54, and a communication processing unit 43. Incidentally, an experience information search unit 16 is used instead of the experience information search unit 13 and an experience information registration unit 17 is used instead of the experience information registration unit 14.

The communication processing unit 43 and the communication processing unit 54 execute processing for having the autonomous driving vehicle 1 and the data center 50 implement data communication via the communication network 60.

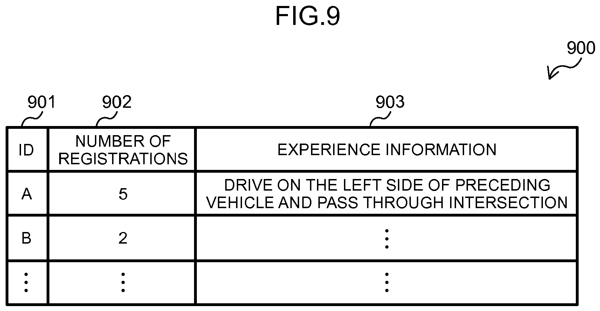

The experience information database 51 is a database for storing the status information table 300 (see Fig. 3) and an experience information table 900 (see Fig. 9).

The experience information search unit 16 has a function that notifies the experience information search unit 52 in the data center 50, via the communication processing unit 43 and the communication network 60, of the status information received from the control judgment unit 12. Also, the experience information search unit 16 has a function that receives a search result reported from the experience information search unit 52 in the data center 50 via the communication network 60 and the communication processing unit 43 and notifies the control judgment unit 12 of the received search result.

The experience information search unit 52 has a function that searches the status information table 300 and the experience information table 900, which are stored in the experience information database 51, for the experience information by using the status information received from the experience information search unit 16 as the search key and notifies the control judgment unit 12, via the communication processing unit 54 and the communication network 60, of the relevant experience information if the corresponding entries exist in the status information table 300 and the experience information table 900. Under this circumstance, when a plurality of pieces of the experience information exist with respect to the status information, for example, the experience information of an entry in which the number of registrations 902 is large in the experience information table 900 is reported.

The experience information registration unit 17 has a function that sends notification for registering and deleting a new entry to the status information table 300 and the experience information table 900, which are stored in the experience information database 51 retained by the data center 50, to the experience information registration unit 53 in the data center 50 via the communication processing unit 43 and the communication network 60. When the control judgment unit 12 determines to start registering the experience information and the control judgment unit 12 receives the same status information as that reported to the experience information search unit 16, the experience information registration unit 17 retains the received status information. Moreover, the experience information registration unit 17 retains the control method information received from the control execution unit 40 by associating it with the status information; and when the experience information registration unit 17 receives notification of the termination of the experience information registration state from the control judgment unit 12, it creates experience information, which is the control method for traveling along a route between two points, from the retained control method information and notifies the experience information registration unit 53 of the created experience information and the corresponding status information as a registration request. Furthermore, when receiving notification from the control judgment unit 12 to delete an entry/entries regarding the experience information in the experience information database 51, the experience information registration unit 17 accordingly notifies the experience information registration unit 53 of a deletion request.

When the experience information registration unit 53 receives a registration request from the experience information registration unit 17 of the autonomous driving control apparatus 10, it executes the following registration processing by referring to entries in the experience information database 51 indicating the status information and an entry/entries indicating the experience information). If an entry with the same status information already exists with respect to the received registration request and an entry indicating the experience information with the same content associated with that status information exists, the number of registrations for the entry of the relevant experience information is increased by "1." Furthermore, if an entry with the same status information already exists and an entry indicating another content as the experience information associated with that status information exists, the experience information registration unit 53 creates a new entry of the relevant experience information and associates that new entry with the existing entry of the status information. If the same status information as the received status information does not exist, the experience information registration unit 53 registers a new entry by associating the status information with the status information table 300 and associating the experience information with the experience information table 900.

Furthermore, when the experience information registration unit 53 receives notification from the experience information registration unit 17 indicating a request to delete the experience information, it decreases the number of registrations for the entry of the corresponding experience information by "1." Under this circumstance, when the number of registrations becomes "0" as a result of the decrease of the number of registrations by "1," the experience information registration unit 53 deletes the relevant entry and deletes the relevant experience information ID for the entry of the corresponding status information. Furthermore, under this circumstance, when the corresponding experience information ID no longer exists from the entry of the relevant status information, the experience information registration unit 53 deletes the entry of the relevant status information.

Fig. 9 illustrates a configuration example of the experience information table 900 according to this embodiment. The difference from the experience information table 400 according to Embodiment 1 is that the experience information table 900 includes the number of registrations 902. When the notification of registration of the relevant experience information is received, the number of registrations 902 is increased by "1"; and if the number of registrations 902 then becomes "0," the relevant entry is deleted. Under this circumstance, the experience information table 900 of the experience information database 51 stores: information of the number of registrations 902 associated with an ID 901 which is specified by the status information; and information of experience information 903 associated with the ID 901. Each piece of the experience information 903 stores the experience information obtained from the driver's vehicle 1 and other vehicles.

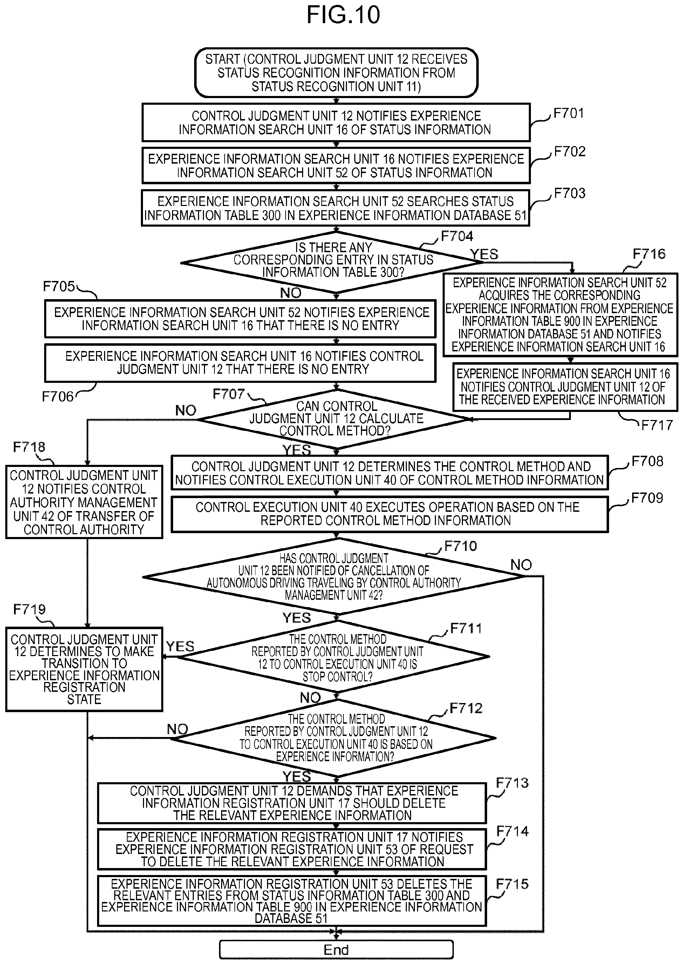

Processing of the driver's vehicle 1 and the data center 50 in a normal state where the driver's vehicle 1 implements the autonomous driving traveling when the control judgment unit 12 receives the status recognition information which is periodically output from the status recognition unit 11 will be explained below in accordance with a flowchart illustrated in Fig. 10.

When the control judgment unit 12 firstly receives the status recognition information calculated by the status recognition unit 11 based on the information from the sensor map information group 20 and the vehicle motion information group 30, the control judgment unit 12 extracts the status information, which the experience information search unit 52 requires as the search key, from the received status recognition information and notifies the experience information search unit 52 of the extracted status information (F701). The experience information search unit 16 notifies the experience information search unit 52 of the data center 50, via the communication processing unit 43 and the communication network 60, of the status information (F702). Having received the status information, the experience information search unit 52 searches the status information table 300 in the experience information database 51 by using the status information as the search key (F703) and judges whether there is any corresponding entry in the status information table 300 or not (F704). Regarding the judgment on whether there is any corresponding entry or not under this circumstance, it may be judged that there is a corresponding entry even when only some of the plurality of pieces of the status information, which serves as the search key, matches the information of the relevant entry. Furthermore, it may be judged that, for example, the driver's vehicle position 302 among the status information matches the information of the relevant entry if it is within a predefined range of error.

If it is judged in step F704 that there is no corresponding entry, the experience information search unit 52 notifies the experience information search unit 16 that there is no corresponding entry in the status information table 300 (F705); the experience information search unit 16 notifies the control judgment unit 12 that there is no corresponding entry in the status information table 300 (F706); and then the processing proceeds to processing of step F707. On the other hand, if it is judged in step F704 that there is a corresponding entry, the experience information search unit 52 acquires the corresponding experience information 903 from the experience information table 900 in the experience information database 51 by using the experience information ID 309 of the relevant entry as the search key and notifies the experience information search unit 16 of the acquired experience information 903 (F716). Under this circumstance, if a plurality of pieces of the experience information exist with respect to the status information, for example, the experience information search unit 52 acquires and reports the experience information 903 for an entry in which the number of registrations 902 is large. The experience information search unit 16 notifies the control judgment unit 12 of the received experience information 903 (F717) and proceeds to the processing of step F707. The control judgment unit 12 retains the received experience information 903.

Next, the control judgment unit 12 judges whether the control method can be calculated or not by executing control method judgment processing by using the status recognition information received from the status recognition unit 11 and the retained experience information (when it is retained) (F707). If it is judged in step F707 that the control method can be calculated, the control judgment unit 12 determines the control method obtained by the control method judgment processing and notifies the control execution unit 40 of information about the determined control method as the control method information (F708). The control execution unit 40 executes the operation of the driver's vehicle 1 in accordance with the reported control method information (F709). Under this circumstance, when the driver's vehicle position indicated by the experience information retained by the control judgment unit 12 is off the route, the control execution unit 40 deletes the relevant experience information (F708, F709).

On the other hand, if the control judgment unit 12 cannot calculate the control method when executing the control method judgment processing, that is, if it is judged in step F707 that the control method cannot be calculated, the control judgment unit 12 notifies the control authority management unit 42 of transfer of the control authority (cancellation of the autonomous driving traveling) (F718), then determines to make the transition to the experience information registration state (F719), and terminates the processing in this routine. Incidentally, processing of the experience information registration state will be described later.

Furthermore, after the operation of the driver's vehicle 1 is executed in step F709, the control judgment unit 12 judges whether or not it has been notified by the control authority management unit 42 of the cancellation of the autonomous driving traveling (F710). If the control judgment unit 12 judges in step F710 that it has been notified by the control authority management unit 42 of the cancellation of the autonomous driving traveling, the control judgment unit 12 judges whether the control method reported to the control execution unit 40 (the control method information) is stop control or not (F711); and if the control judgment unit 12 judges in step F710 that it has not been notified by the control authority management unit 42 of the cancellation of the autonomous driving traveling, the control judgment unit 12 terminates the processing in this routine.

If the control judgment unit 12 judges in step F711 that the control method reported to the control execution unit 40 is the stop control, it proceeds to step F719 and determines to make the transition to the experience information registration state (F719). Specifically speaking, as a result of execution of the operation of the driver's vehicle 1 by the control execution unit 12 based on the reported control method information (F709), when the control judgment unit 12 is notified by the control authority management unit 42 of the cancellation of the autonomous driving traveling upon the user's request (F710) and the control method reported by the control judgment unit 12 to the control execution unit 40 is the stop control (F711), the control judgment unit 12 determines to make the transition to the experience information registration state (F719). Furthermore, if the control judgment unit 12 judges in step F711 that the control method reported to the control execution unit 40 is not the stop control, it judges whether the control method reported to the control execution unit 40 (the control method information) is based on the experience information or not (F712).

If the control judgment unit 12 judges in step F712 that the control method reported to the control execution unit 40 (the control method information) is not based on the experience information, it terminates the processing in this routine; and if the control judgment unit 12 judges in step F712 that the control method reported to the control execution unit 40 (the control method information) is based on the experience information, it requests that the experience information registration unit 17 should delete the relevant experience information (F713). Specifically speaking, if the control judgment unit 12 has been notified by the control authority management unit 42 of the cancellation of the autonomous driving traveling in response to the user's request (F708), if the control method then reported by the control judgment unit 12 to the control execution unit 40 is not the stop control (F711), and if the reported control method is based on the experience information (F712), the control judgment unit 12 requests that the experience information registration unit 17 should delete the used experience information (F713).

Having received this request, the experience information registration unit 17 notifies the experience information registration unit 53 of a request to delete the relevant experience information (F714). The experience information registration unit 53 which has received this notification deletes the relevant entries from the status information table 300 and the experience information table 900 in the experience information database 51 (F715) and terminates the processing in this routine. Under this circumstance, when the experience information registration unit 53 receives notification to indicate the deletion of the entry, it decreases the number of registrations 902 (see the experience information table 900) for an entry of the corresponding experience information by "1." If the number of registrations 902 becomes "0" as a result of the decrease by "1" under this circumstance, the experience information registration unit 53deletes the relevant entry and also deletes the relevant experience information ID 309 (see the status information table 300) for an entry of the corresponding status information. Furthermore, if the associated experience information ID 309 no longer exists from the entry of the relevant status information under this circumstance, the experience information registration unit 53 deletes the entry of the relevant status information.

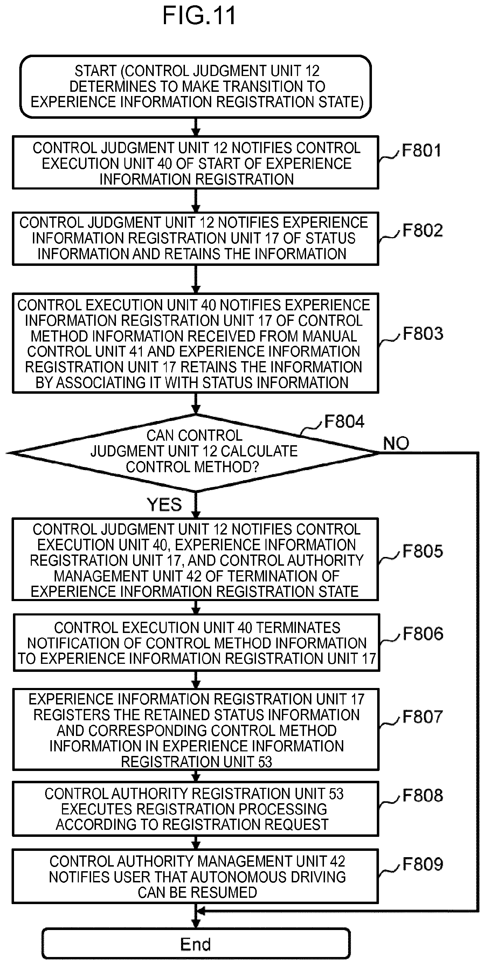

Next, processing of the autonomous driving control apparatus 10 and processing of and the data center 50 when the control judgment unit 12 determines to make the transition to the experience information registration state will be explained below in accordance with a flowchart illustrated in Fig. 11.

When the control judgment unit 12 firstly determines to make the transition to the experience information registration state, the control judgment unit 12 notifies the control execution unit 40 of start of registration of the experience information (F801). Then, when the control judgment unit 12 notifies the experience information registration unit 17 of the retained status information, the experience information registration unit 17 retains that information (status information) (F802). Furthermore, the control execution unit 40 notifies the experience information registration unit 17 of the control method information received from the manual control unit 41 (the control method information based on the operation information) and the experience information registration unit 17 retains that information (the control method information) by associating it with the status information (the retained status information) (F803).

Under this circumstance, the control judgment unit 12 judges whether the control method can be calculated (or determined) or not, based on the status recognition information received from the status recognition unit 11 (F804); and if the control judgment unit 12 judges that the control method cannot be calculated, it terminates the processing in this routine; and if the control judgment unit 12 judges that the control method can be calculated, it notifies the control execution unit 40, the experience information registration unit 17, and the control authority management unit 42 of termination of the experience information registration state (F805). Consequently, the control execution unit 40 stops notifying the experience information registration unit 17 of the control method information (the control method information based on the operation information) (F806) and the experience information registration unit 17 creates experience information from the retained status information and the retained control method information and notifies the experience information registration unit 53 of a registration request (F807). The experience information registration unit 53 which has received the registration request executes the following registration processing by referring to entries in the experience information database 51 indicating the status information and an entry/entries indicating the experience information).

If an entry with the same status information (an entry in Fig. 3) already exists with respect to the received registration request and an entry indicating the experience information with the same content associated with that status information (an entry in Fig. 9) exists, the number of registrations 902 for the entry of the relevant experience information 903 is increased by "1." Furthermore, if an entry with the same status information already exists and an entry indicating another content as the experience information associated with that status information exists, the experience information registration unit 53 creates a new entry of the relevant experience information 903 and associates that new entry with the existing entry of the status information. If the same status information as the received status information does not exist, the experience information registration unit 53 registers a new entry by associating the status information with the status information table 300 and associating the experience information with the experience information table 900 (F808).

Incidentally, when the experience information registration unit 53 receives notification from the experience information registration unit 16 indicating a request to delete the experience information, it decreases the number of registrations for the entry of the corresponding experience information 903 by "1." Under this circumstance, when the number of registrations becomes "0" as a result of the decrease of the number of registrations 902 by "1," the relevant entry is deleted and the relevant experience information ID for the entry of the corresponding status information is deleted.

Furthermore, the experience information registration unit 16 can create experience information, which is the control method for traveling along a route between two points, from the retained control method information and register the created experience information in the experience information table 900 so that the experience information will correspond to the registered status information.

Next, the control authority management unit 42: notifies the user that the autonomous driving can be resumed (F809); and terminates the processing in this routine. Accordingly, the normal state is regained and the autonomous driving traveling will be implemented.

According to this embodiment, advantageous effects similar to those of Embodiment 1 can be obtained, the experience information with a large number of registrations can be selected, the autonomous driving traveling which utilizes experiences of other vehicles can be realized, and the autonomous driving traveling with a higher level of safety can be realized. Furthermore, the information obtained from other vehicles can be stored in the experience information database 51 and the configuration of the autonomous driving control apparatus 10 can be simplified by locating the experience information database 51 at the data center 50.

Incidentally, the present invention is not limited to the aforementioned embodiments and includes various variations. For example, the aforementioned embodiments have been described in detail in order to explain this invention in an easily comprehensible manner and are not necessarily limited to those having all the configurations explained above. Furthermore, part of the configuration of an embodiment can be replaced with the configuration of another embodiment and the configuration of another embodiment can be added to the configuration of a certain embodiment. Also, the configuration of another configuration can be added to, or deleted from, or replaced with, part of the configuration of each embodiment.

Furthermore, each of the aforementioned configurations, functions, judgment unit, and so on may be implemented by hardware by, for example, designing part or all of such configurations, functions, and judgment unit by using integrated circuits or the like. Also, each of the aforementioned configurations, functions, and so on may be realized by software by processors interpreting and executing programs for realizing each of the functions. Information such as programs, tables, and files for realizing each of the functions may be recorded and retained in memories, storage devices such as hard disks and SSDs (Solid State Drives), or storage media such as IC (Integrated Circuit) cards, SD (Secure Digital) memory cards, and DVDs (Digital Versatile Discs).

Features described in this specification shall be deemed combinable with each other also if their combination is not expressly described, to the extent that this combination is technically feasible. Embodiments shall not be understood as being meant exclusive against each other. Descriptions of a method or procedure or a method step or a procedural step shall be understood also as description of means and/or program instructions adapted for implementing the method or procedure or method step or procedural step, and vice versa.

### REFERENCE SIGNS LIST

- 1:: autonomous driving vehicle
- 10:: autonomous driving control apparatus
- 11:: status recognition unit
- 12:: control judgment unit
- 13:: experience information search unit
- 14:: experience information registration unit
- 15:: experience information database
- 16:: experience information search unit
- 17:: experience information registration unit
- 20:: sensor map information group
- 21:: GPS apparatus
- 22:: peripheral sensor
- 23:: high-precision map system
- 24:: navigation system
- 30:: vehicle motion information group
- 31:: rudder angle sensor
- 32:: vehicle speed sensor
- 33:: gyrosensor
- 40:: control execution unit
- 41:: manual control unit
- 42:: control authority management unit
- 43:: communication processing unit
- 50:: data center
- 51:: experience information database
- 52:: experience information search unit
- 53:: experience information registration unit
- 54:: communication processing unit
- 60:: communication network
- 101:: CPU
- 102:: RAM
- 103:: ROM
- 104:: input port
- 105:: output port
- 300:: status information table
- 400:: experience information table
- 900:: experience information table

## Claims

1. An autonomous driving assistance apparatus comprising:
a status recognition unit (11) configured to use at least map information and vehicle motion information as input information, said input information including information from a GPS (Global Positioning System) apparatus (21), a periphery sensor (22), a high-precision map system (23), a navigation system (24), a rudder angle sensor (31) for detecting a rudder angle, a vehicle speed sensor (32) for detecting a vehicle speed, and a gyrosensor (33) for detecting an angular velocity, and calculate status recognition information, including status information about a status of a vehicle and a peripheral status of the vehicle, based on the input information;
a control execution unit (40) and a manual control unit (41) configured to output to said control execution unit (40) operation information obtained by manual operation, said operation information including information on operating a steering wheel and an accelerator and a brake by the user;
an experience information database (15) configured to store in a status information table (300) the status information (302 - 309) belonging to the status recognition information and in an experience information table (400) experience information (402) representing information obtained from the operation information about a control method for the vehicle traveling along a route during manual driving with manual operation, wherein the status information and the experience information are stored in associated manner;
an experience information registration unit (14) configured to manage information stored in the experience information database (15);
an experience information search unit (13) configured to search the experience information database (15) by using the status information belonging to the status recognition information as a search key and extract the experience information corresponding to the search key from the experience information database (15);
a control judgment unit (12) configured to:
- judge whether traveling by autonomous driving is deemed possible or not, based on at least the experience information extracted by the experience information search unit (13);
- cancel the autonomous driving traveling if the autonomous driving traveling is judged impossible; and
- calculate a control method for the autonomous driving traveling based on the experience information extracted by the experience information search unit and output control method information about the calculated control method if the autonomous driving traveling is judged possible;
wherein said control execution unit (40) is configured to implement the autonomous driving traveling by operating the vehicle based on the control method information output by the control judgment unit (12), and
the experience information registration unit (14) is configured to register, during a period of time after the control judgment unit (12) cancels the autonomous driving traveling until the control judgment unit (12) then judges that the autonomous driving traveling is possible, the experience information, in the experience information database (15) by associating the experience information with the status information.

2. The autonomous driving assistance apparatus according to claim 1,
wherein the experience information database is configured to store the status information belonging to the status recognition information and the experience information by associating the status information with the experience information and also stores the experience information by associating the experience information with the number of registrations of the experience information; and
wherein the experience information search unit is configured to extract, when searching the experience information database by using the status information as the search key, the experience information based on the number of registrations as the experience information corresponding to the search key from the experience information database.

3. The autonomous driving assistance apparatus according to claim 1,
wherein the periphery recognition information includes information indicative of a lane-based position of the vehicle as the status information;
wherein the experience information database is configured to store the information indicative of the lane-based position of the vehicle as the status information belonging to the status recognition information; and
wherein the experience information search unit is configured to search the experience information database by using the information indicative of the lane-based position of the vehicle as the search key and extracts the experience information corresponding to the search key from the experience information database.

4. The autonomous driving assistance apparatus according to claim 1,
wherein the periphery recognition information includes information which is about a preceding vehicle of the vehicle as the status information and includes information about a preceding vehicle position indicative of a position of the preceding vehicle relative to the vehicle and information about a preceding vehicle status indicative of a traveling status of the preceding vehicle;
wherein the experience information database is configured to store the information about the preceding vehicle position and the information about the preceding vehicle status as the status information belonging to the status recognition information; and
wherein the experience information search unit is configured to search the experience information database by using the information about the preceding vehicle position and the information about the preceding vehicle status as the search key and extracts the experience information corresponding to the search key from the experience information database.

5. The autonomous driving assistance apparatus according to claim 1,
wherein the experience information database is mounted in the vehicle which implements the autonomous driving traveling.

6. The autonomous driving assistance apparatus according to claim 1,
wherein the experience information database is located in a data center coupled to the vehicle, which implements the autonomous driving traveling, via a communication network.

7. An autonomous driving assistance method comprising:
a status recognition step of using at least map information and vehicle motion information as input information, said input information including information from a GPS (Global Positioning System) apparatus 21, a periphery sensor (22), a high-precision map system (23), a navigation system (24), a rudder angle sensor (31) for detecting a rudder angle, a vehicle speed sensor (32) for detecting a vehicle speed, and a gyrosensor (33) for detecting an angular velocity, and calculating status recognition information, including status information about a status of a vehicle and a peripheral status of the vehicle, based on the input information;
a manual control step of outputting, for control execution, operation information obtained by manual operation, said operation information including information on operating a steering wheel and an accelerator and a brake by the user;
an experience information registration step of managing an experience information database that stores in a status information table (300) the status information belonging to the status recognition information and in an experience information table (400) experience information representing information obtained from the operation information about a control method for the vehicle traveling along a route during manual driving with manual operation, wherein the status information and the experience information are stored in associated manner;
an experience information search step of searching the experience information database by using the status information belonging to the status recognition information as a search key and extracting the experience information corresponding to the search key from the experience information database;
a control judgment step of:
- judging whether autonomous driving traveling is deemed possible or not, based on at least the experience information extracted in the experience information search step;
- canceling the autonomous driving traveling if the autonomous driving traveling is judged impossible; and
- calculating a control method for the autonomous driving traveling based on the experience information extracted in the experience information search step and outputting control method information about the calculated control method if the autonomous driving traveling is judged possible; and
a control execution step of implementing the autonomous driving traveling by operating the vehicle based on the control method information which is a processing result of the control judgment step,
wherein in the experience information registration step, during a period of time after the autonomous driving traveling is canceled in the control judgment step until it is then judged that the autonomous driving traveling is possible, the experience information is registered in the experience information database by associating the experience information with the status information.

8. The autonomous driving assistance method according to claim 7,
wherein the experience information database stores the status information belonging to the status recognition information and the experience information by associating the status information with the experience information and also stores the experience information by associating the experience information with the number of registrations of the experience information; and
wherein in the experience information search step when searching the experience information database by using the status information as the search key, the experience information based on the number of registrations is extracted from the experience information database as the experience information corresponding to the search key.

9. The autonomous driving assistance method according to claim 7,
wherein the periphery recognition information includes information indicative of a lane-based position of the vehicle as the status information;
wherein the experience information database stores the information indicative of the lane-based position of the vehicle as the status information belonging to the status recognition information; and
wherein in the experience information search step, the experience information database is searched by using the information indicative of the lane-based position of the vehicle as the search key and the experience information corresponding to the search key is extracted from the experience information database.

10. The autonomous driving assistance method according to claim 7,
wherein the periphery recognition information includes information which is about a preceding vehicle of the vehicle as the status information and includes information about a preceding vehicle position indicative of a position of the preceding vehicle relative to the vehicle and information about a preceding vehicle status indicative of a traveling status of the preceding vehicle;
wherein the experience information database stores the information about the preceding vehicle position and the information about the preceding vehicle status as the status information belonging to the status recognition information; and
wherein in the experience information search step, the experience information database is searched by using the information about the preceding vehicle position and the information about the preceding vehicle status as the search key and the experience information corresponding to the search key is extracted from the experience information database.

11. The autonomous driving assistance method according to claim 7,
wherein the experience information database is mounted in the vehicle which implements the autonomous driving traveling.

12. The autonomous driving assistance method according to claim 7,
wherein the experience information database is located in a data center coupled to the vehicle, which implements the autonomous driving traveling, via a communication network.

## Patentansprüche

1. Assistenzvorrichtung für autonomes Fahren, umfassend:
eine Statuserkennungseinheit (11), die konfiguriert ist, um mindestens Karteninformationen und Fahrzeugbewegungsinformationen als Eingabeinformationen zu verwenden, wobei die Eingabeinformationen Informationen von einer GPS- (Global Positioning System-) Vorrichtung (21), einem Umgebungssensor (22), einem hochpräzisen Kartensystem (23), einem Navigationssystem (24), einem Steuerwinkelsensor (31) zum Erfassen eines Steuerwinkels, einem Fahrzeuggeschwindigkeitssensor (32) zum Erfassen einer Fahrzeuggeschwindigkeit und einem Gyrosensor (33) zum Erfassen einer Winkelgeschwindigkeit umfassen, und Statuserkennungsinformationen, die Statusinformationen über einen Status eines Fahrzeugs und einen Umgebungsstatus des Fahrzeugs umfassen, basierend auf den Eingabeinformationen zu berechnen;
eine Steuerungsausführungseinheit (40) und eine manuelle Steuereinheit (41), die konfiguriert sind, um an die Steuerungsausführungseinheit (40) durch manuelle Betätigung erhaltene Betätigungsinformationen auszugeben, wobei die Betätigungsinformationen Informationen über die Betätigung eines Lenkrads und eines Gaspedals und einer Bremse durch den Benutzer umfassen;
eine Erfahrungsinformationsdatenbank (15), die konfiguriert ist, um in einer Statusinformationstabelle (300) die Statusinformationen (302 - 309), die zu den Statuserkennungsinformationen gehören, und in einer Erfahrungsinformationstabelle (400) Erfahrungsinformationen (402) zu speichern, die Informationen darstellen, die aus den Betätigungsinformationen über ein Steuerungsverfahren für das Fahrzeug erhalten werden, das während manueller Fahrt mit manueller Betätigung entlang einer Route fährt, wobei die Statusinformationen und die Erfahrungsinformationen in zugeordneter Weise gespeichert sind;
eine Erfahrungsinformationsregistrierungseinheit (14), die konfiguriert ist, um in der Erfahrungsinformationsdatenbank (15) gespeicherte Informationen zu verwalten;
eine Erfahrungsinformationssucheinheit (13), die konfiguriert ist, um die Erfahrungsinformationsdatenbank (15) durch Verwenden der Statusinformationen, die zu den Statuserkennungsinformationen gehören, als einen Suchschlüssel zu durchsuchen und die dem Suchschlüssel entsprechenden Erfahrungsinformationen aus der Erfahrungsinformationsdatenbank (15) zu extrahieren;
eine Steuerungsbeurteilungseinheit (12), die konfiguriert ist, um:
- basierend auf mindestens den durch die Erfahrungsinformationssucheinheit (13) extrahierten Erfahrungsinformationen zu beurteilen, ob Fahren durch autonome Fahrt als möglich beurteilt wird oder nicht;
- das Fahren mit autonomer Fahrt abzubrechen, wenn das Fahren mit autonomer Fahrt als unmöglich beurteilt wird; und
- ein Steuerungsverfahren für das Fahren mit autonomer Fahrt basierend auf den durch die Erfahrungsinformationssucheinheit extrahierten Erfahrungsinformationen zu berechnen und Steuerungsverfahrensinformationen über das berechnete Steuerungsverfahren auszugeben, wenn das Fahren mit autonomer Fahrt als möglich beurteilt wird;
wobei die Steuerungsausführungseinheit (40) konfiguriert ist, um das Fahren mit autonomer Fahrt durch Betreiben des Fahrzeugs basierend auf den durch die Steuerungsbeurteilungseinheit (12) ausgegebenen Steuerungsverfahrensinformationen zu implementieren, und
die Erfahrungsinformationsregistrierungseinheit (14) konfiguriert ist, um während eines Zeitraums, nachdem die Steuerungsbeurteilungseinheit (12) das Fahren mit autonomer Fahrt abgebrochen hat, bis die Steuerungsbeurteilungseinheit (12) dann beurteilt, dass das Fahren mit autonomer Fahrt möglich ist, die Erfahrungsinformationen in der Erfahrungsinformationsdatenbank (15) durch Verknüpfen der Erfahrungsinformationen mit den Statusinformationen zu registrieren.

2. Assistenzvorrichtung für autonomes Fahren nach Anspruch 1,
wobei die Erfahrungsinformationsdatenbank konfiguriert ist, um die Statusinformationen, die zu den Statuserkennungsinformationen gehören, und die Erfahrungsinformationen durch Verknüpfen der Statusinformationen mit den Erfahrungsinformationen zu speichern und auch die Erfahrungsinformationen durch Verknüpfen der Erfahrungsinformationen mit der Anzahl von Registrierungen der Erfahrungsinformationen zu speichern; und
wobei die Erfahrungsinformationssucheinheit konfiguriert ist, um beim Durchsuchen der Erfahrungsinformationsdatenbank durch Verwenden der Statusinformationen als den Suchschlüssel die Erfahrungsinformationen basierend auf der Anzahl von Registrierungen als die dem Suchschlüssel entsprechenden Erfahrungsinformationen aus der Erfahrungsinformationsdatenbank zu extrahieren.

3. Assistenzvorrichtung für autonomes Fahren nach Anspruch 1,
wobei die Umgebungserkennungsinformationen Informationen umfassen, die eine spurbasierte Position des Fahrzeugs als die Statusinformationen angeben;
wobei die Erfahrungsinformationsdatenbank konfiguriert ist, um die Informationen, die die spurbasierte Position des Fahrzeugs angeben, als die Statusinformationen zu speichern, die zu den Statuserkennungsinformationen gehören; und
wobei die Erfahrungsinformationssucheinheit konfiguriert ist, um die Erfahrungsinformationsdatenbank durch Verwenden der Informationen, die die spurbasierte Position des Fahrzeugs angeben, als den Suchschlüssel zu durchsuchen, und die dem Suchschlüssel entsprechenden Erfahrungsinformationen aus der Erfahrungsinformationsdatenbank extrahiert.

4. Assistenzvorrichtung für autonomes Fahren nach Anspruch 1,
wobei die Umgebungserkennungsinformationen Informationen über ein vorausfahrendes Fahrzeug des Fahrzeugs als die Statusinformationen umfassen, und Informationen über eine Position des vorausfahrenden Fahrzeugs, die eine Position des vorausfahrenden Fahrzeugs relativ zu dem Fahrzeug angibt, und Informationen über einen Status des vorausfahrenden Fahrzeugs umfassen, die einen Fahrstatus des vorausfahrenden Fahrzeugs angeben;
wobei die Erfahrungsinformationsdatenbank konfiguriert ist, um die Informationen über die Position des vorausfahrenden Fahrzeugs und die Informationen über den Status des vorausfahrenden Fahrzeugs als die Statusinformationen zu speichern, die zu den Statuserkennungsinformationen gehören; und
wobei die Erfahrungsinformationssucheinheit konfiguriert ist, um die Erfahrungsinformationsdatenbank durch Verwenden der Informationen über die Position des vorausfahrenden Fahrzeugs und der Informationen über den Status des vorausfahrenden Fahrzeugs als den Suchschlüssel zu durchsuchen und die dem Suchschlüssel entsprechenden Erfahrungsinformationen aus der Erfahrungsinformationsdatenbank extrahiert.

5. Assistenzvorrichtung für autonomes Fahren nach Anspruch 1,
wobei die Erfahrungsinformationsdatenbank in dem Fahrzeug montiert ist, das das Fahren mit autonomer Fahrt implementiert.

6. Assistenzvorrichtung für autonomes Fahren nach Anspruch 1,
wobei sich die Erfahrungsinformationsdatenbank in einem Datenzentrum befindet, das mit dem Fahrzeug gekoppelt ist, das das Fahren mit autonomer Fahrt über ein Kommunikationsnetzwerk implementiert.

7. Assistenzverfahren für autonomes Fahren, umfassend:
einen Statuserkennungsschritt zum Verwenden mindestens von Karteninformationen und Fahrzeugbewegungsinformationen als Eingabeinformationen, wobei die Eingabeinformationen Informationen von einer GPS- (Global Positioning System-) Vorrichtung (21), einem Umgebungssensor (22), einem hochpräzisen Kartensystem (23), einem Navigationssystem (24), einem Steuerwinkelsensor (31) zum Erfassen eines Steuerwinkels, einem Fahrzeuggeschwindigkeitssensor (32) zum Erfassen einer Fahrzeuggeschwindigkeit und einem Gyrosensor (33) zum Erfassen einer Winkelgeschwindigkeit umfassen, und Berechnen von Statuserkennungsinformationen, die Statusinformationen über einen Status eines Fahrzeugs und einen Umgebungsstatus des Fahrzeugs umfassen, basierend auf den Eingabeinformationen;
einen manuellen Steuerungsschritt zum Ausgeben von durch manuelle Betätigung erhaltenen Betätigungsinformationen zur Steuerungsausführung, wobei die Betätigungsinformationen Informationen über die Betätigung eines Lenkrads und eines Gaspedals und einer Bremse durch den Benutzer umfassen;
einen Erfahrungsinformationsregistrierungsschritt zum Verwalten einer Erfahrungsinformationsdatenbank, die in einer Statusinformationstabelle (300) die Statusinformationen, die zu den Statuserkennungsinformationen gehören, und in einer Erfahrungsinformationstabelle (400) Erfahrungsinformationen speichert, die Informationen darstellen, die aus den Betätigungsinformationen über ein Steuerungsverfahren für das Fahrzeug erhalten werden, das während manueller Fahrt mit manueller Betätigung entlang einer Route fährt, wobei die Statusinformationen und die Erfahrungsinformationen in zugeordneter Weise gespeichert sind;
einen Erfahrungsinformationssuchschritt zum Durchsuchen der Erfahrungsinformationsdatenbank durch Verwenden der Statusinformationen, die zu den Statuserkennungsinformationen gehören, als einen Suchschlüssel und Extrahieren der dem Suchschlüssel entsprechenden Erfahrungsinformationen aus der Erfahrungsinformationsdatenbank;
einen Steuerungsbeurteilungsschritt zum:
- Beurteilen, ob Fahren mit autonomer Fahrt als möglich beurteilt wird oder nicht, basierend auf mindestens den im Erfahrungsinformationssuchschritt extrahierten Erfahrungsinformationen;
- Abbrechen der Fahrt in autonomem Fahren, wenn das Fahren mit autonomer Fahrt als unmöglich beurteilt wird; und
- Berechnen eines Steuerungsverfahrens für das Fahren mit autonomer Fahrt basierend auf den im Erfahrungsinformationssuchschritt extrahierten Erfahrungsinformationen und Ausgeben von Steuerungsverfahrensinformationen über das berechnete Steuerungsverfahren, wenn das Fahren mit autonomer Fahrt als möglich beurteilt wird; und
einen Steuerungsausführungsschritt zum Implementieren des Fahrens mit autonomer Fahrt durch Betreiben des Fahrzeugs basierend auf den Steuerungsverfahrensinformationen, die ein Verarbeitungsergebnis des Steuerungsbeurteilungsschritts sind,
wobei im Erfahrungsinformationsregistrierungsschritt während eines Zeitraums, nachdem das Fahren mit autonomer Fahrt im Steuerungsbeurteilungsschritt abgebrochen wurde, bis dann beurteilt wird, dass das Fahren mit autonomer Fahrt möglich ist, die Erfahrungsinformationen in der Erfahrungsinformationsdatenbank durch Verknüpfen der Erfahrungsinformationen mit den Statusinformationen registriert werden.

8. Assistenzverfahren für autonomes Fahren nach Anspruch 7,
wobei die Erfahrungsinformationsdatenbank die Statusinformationen, die zu den Statuserkennungsinformationen gehören, und die Erfahrungsinformationen durch Verknüpfen der Statusinformationen mit den Erfahrungsinformationen speichert und auch die Erfahrungsinformationen durch Verknüpfen der Erfahrungsinformationen mit der Anzahl von Registrierungen der Erfahrungsinformationen speichert; und
wobei im Erfahrungsinformationssuchschritt beim Durchsuchen der Erfahrungsinformationsdatenbank durch Verwenden der Statusinformationen als den Suchschlüssel die Erfahrungsinformationen basierend auf der Anzahl von Registrierungen aus der Erfahrungsinformationsdatenbank als die dem Suchschlüssel entsprechenden Erfahrungsinformationen extrahiert werden.

9. Assistenzverfahren für autonomes Fahren nach Anspruch 7,
wobei die Umgebungserkennungsinformationen Informationen umfassen, die eine spurbasierte Position des Fahrzeugs als die Statusinformationen angeben;
wobei die Erfahrungsinformationsdatenbank die Informationen, die die spurbasierte Position des Fahrzeugs angeben, als die Statusinformationen speichert, die zu den Statuserkennungsinformationen gehören; und
wobei im Erfahrungsinformationssuchschritt die Erfahrungsinformationsdatenbank durch Verwenden der Informationen, die die spurbasierte Position des Fahrzeugs angeben, als den Suchschlüssel durchsucht wird und die dem Suchschlüssel entsprechenden Erfahrungsinformationen aus der Erfahrungsinformationsdatenbank extrahiert werden.

10. Assistenzverfahren für autonomes Fahren nach Anspruch 7,
wobei die Umgebungserkennungsinformationen Informationen über ein vorausfahrendes Fahrzeug des Fahrzeugs als die Statusinformationen umfassen und Informationen über eine Position des vorausfahrenden Fahrzeugs, die eine Position des vorausfahrenden Fahrzeugs relativ zu dem Fahrzeug angibt, und Informationen über einen Status des vorausfahrenden Fahrzeugs umfassen, die einen Fahrstatus des vorausfahrenden Fahrzeugs angeben;
wobei die Erfahrungsinformationsdatenbank die Informationen über die Position des vorausfahrenden Fahrzeugs und die Informationen über den Status des vorausfahrenden Fahrzeugs als die Statusinformationen speichert, die zu den Statuserkennungsinformationen gehören; und
wobei im Erfahrungsinformationssuchschritt die Erfahrungsinformationsdatenbank durch Verwenden der Informationen über die Position des vorausfahrenden Fahrzeugs und der Informationen über den Status des vorausfahrenden Fahrzeugs als den Suchschlüssel durchsucht wird und die dem Suchschlüssel entsprechenden Erfahrungsinformationen aus der Erfahrungsinformationsdatenbank extrahiert werden.

11. Assistenzverfahren für autonomes Fahren nach Anspruch 7,
wobei die Erfahrungsinformationsdatenbank in dem Fahrzeug montiert ist, das das Fahren mit autonomer Fahrt implementiert.

12. Assistenzverfahren für autonomes Fahren nach Anspruch 7,
wobei sich die Erfahrungsinformationsdatenbank in einem Datenzentrum befindet, das mit dem Fahrzeug gekoppelt ist, das das Fahren mit autonomer Fahrt über ein Kommunikationsnetzwerk implementiert.

## Revendications

1. Appareil d'assistance à la conduite autonome comprenant :
une unité de reconnaissance d'état (11) configurée pour utiliser au moins des informations cartographiques et des informations de déplacement d'un véhicule à titre d'informations d'entrée, lesdites informations d'entrée incluant des informations provenant d'un système de positionnement par satellites GPS (Global Positioning System) (21), d'un capteur périphérique (22), d'un système cartographique à haute précision (23), d'un système de navigation (24), d'un capteur d'angle de gouvernail (31) destiné à détecter un angle de gouvernail, d'un capteur de vitesse de véhicule (32) destiné à détecter une vitesse de véhicule, et d'un capteur gyroscopique (33) destiné à détecter une vitesse angulaire, et pour calculer des informations de reconnaissance d'état, incluant des informations d'état concernant un état d'un véhicule et un état périphérique du véhicule, sur la base des informations d'entrée ;
une unité d'exécution de commande (40) et une unité de commande manuelle (41) configurée pour sortir vers ladite unité d'exécution de commande (40) des informations d'actionnement obtenues par actionnement manuel, lesdites informations d'actionnement incluant des informations concernant un actionnement d'un volant de direction et d'un accélérateur et d'un frein par l'utilisateur ;
une base de données d'informations d'expérience (15) configurée pour stocker, dans une table d'informations d'état (300), les informations d'état (302 - 309) faisant partie des informations de reconnaissance d'état et, dans une table d'informations d'expérience (400), des informations d'expérience (402) représentant des informations obtenues à partir des informations d'actionnement concernant une méthode de commande pour le véhicule circulant le long d'un itinéraire pendant une conduite manuelle avec un actionnement manuel, les informations d'état et les informations d'expérience étant stockées en étant associées ;
une unité d'enregistrement d'informations d'expérience (14) configurée pour gérer des informations stockées dans la base de données d'informations d'expérience (15) ;
une unité de recherche d'informations d'expérience (13) configurée pour effectuer une recherche dans la base de données d'informations d'expérience (15) en utilisant les informations d'état faisant partie des informations de reconnaissance d'état à titre de clé de recherche et pour extraire de la base de données d'informations d'expérience (15) les informations d'expérience correspondant à la clé de recherche ;
une unité de jugement de commande (12) configurée pour :
- juger si une circulation par conduite autonome est estimée possible ou non sur la base au moins des informations d'expérience extraites par l'unité de recherche d'informations d'expérience (13) ;
- annuler la circulation par conduite autonome si la circulation par conduite autonome est jugée impossible ; et
- calculer une méthode de commande pour la circulation par conduite autonome sur la base des informations d'expérience extraites par l'unité de recherche d'informations d'expérience, et sortir des informations de méthode de commande concernant la méthode de commande calculée si la circulation par conduite autonome est jugée possible ;
dans lequel ladite unité d'exécution de commande (40) est configurée pour mettre en oeuvre la circulation par conduite autonome en actionnant le véhicule sur la base des informations de méthode de commande sorties par l'unité de jugement de commande (12), et
l'unité d'enregistrement d'informations d'expérience (14) est configurée pour enregistrer, pendant une période temporelle après que l'unité de jugement de commande (12) a annulé la circulation par conduite autonome jusqu'à ce que l'unité de jugement de commande (12) juge alors que la circulation par conduite autonome est possible, les informations d'expérience, dans la base de données d'informations d'expérience (15), en associant les informations d'expérience aux informations d'état.

2. Appareil d'assistance à la conduite autonome selon la revendication 1,
dans lequel la base de données d'informations d'expérience est configurée pour stocker les informations d'état faisant partie des informations de reconnaissance d'état et les informations d'expérience en associant les informations d'état aux informations d'expérience, et pour également stocker les informations d'expérience en associant les informations d'expérience au nombre d'enregistrements des informations d'expérience ; et
dans lequel l'unité de recherche d'informations d'expérience est configurée pour extraire de la base de données d'informations d'expérience, lors de la recherche dans la base de données d'informations d'expérience en utilisant les informations d'état à titre de clé de recherche, les informations d'expérience sur la base du nombre d'enregistrements à titre d'informations d'expérience correspondant à la clé de recherche.

3. Appareil d'assistance à la conduite autonome selon la revendication 1,
dans lequel les informations de reconnaissance périphérique incluent des informations indiquant une position basée sur une voie du véhicule à titre d'informations d'état ;
dans lequel la base de données d'informations d'expérience est configurée pour stocker les informations indiquant la position basée sur la voie du véhicule à titre d'informations d'état faisant partie des informations de reconnaissance d'état ; et
dans lequel l'unité de recherche d'informations d'expérience est configurée pour effectuer une recherche dans la base de données d'informations d'expérience en utilisant les informations indiquant la position basée sur la voie du véhicule à titre de clé de recherche, et pour extraire de la base de données d'informations d'expérience les informations d'expérience correspondant à la clé de recherche.

4. Appareil d'assistance à la conduite autonome selon la revendication 1,
dans lequel les informations de reconnaissance périphérique incluent des informations qui concernent un véhicule précédent du véhicule à titre d'informations d'état, et incluent des informations concernant une position de véhicule précédent indiquant une position du véhicule précédent relativement au véhicule, et des informations concernant un état de véhicule précédent indiquant un état de circulation du véhicule précédent ;
dans lequel la base de données d'informations d'expérience est configurée pour stocker les informations concernant la position du véhicule précédent et les informations concernant l'état du véhicule précédent à titre d'informations d'état faisant partie des informations de reconnaissance d'état ; et
dans lequel l'unité de recherche d'informations d'expérience est configurée pour effectuer une recherche dans la base de données d'informations d'expérience en utilisant les informations concernant la position du véhicule précédent et les informations concernant l'état du véhicule précédent à titre de clé de recherche, et pour extraire de la base de données d'informations d'expérience les informations d'expérience correspondant à la clé de recherche.

5. Appareil d'assistance à la conduite autonome selon la revendication 1,
dans lequel la base de données d'informations d'expérience est montée dans le véhicule qui met en oeuvre la circulation par conduite autonome.

6. Appareil d'assistance à la conduite autonome selon la revendication 1,
dans lequel la base de données d'informations d'expérience est située dans un centre de données couplé au véhicule, qui met en oeuvre la circulation par conduite autonome, via un réseau de communication.

7. Procédé d'assistance à la conduite autonome comprenant :
une étape de reconnaissance d'état consistant à utiliser au moins des informations cartographiques et des informations de déplacement d'un véhicule à titre d'information d'entrée, lesdites informations d'entrée incluant des informations provenant d'un système de positionnement par satellites GPS (Global Positioning System) (21), d'un capteur périphérique (22), d'un système cartographique à haute précision (23), d'un système de navigation (24), d'un capteur d'angle de gouvernail (31) destiné à détecter un angle de gouvernail, d'un capteur de vitesse de véhicule (32) destiné à détecter une vitesse de véhicule, et d'un capteur gyroscopique (33) destiné à détecter une vitesse angulaire, et à calculer des informations de reconnaissance d'état, incluant des informations d'état concernant un état d'un véhicule et un état périphérique du véhicule, sur la base des informations d'entrée ;
une étape de commande manuelle consistant à sortir, à des fins d'exécution de commande, des informations d'actionnement obtenues par actionnement manuel, lesdites informations d'actionnement incluant des informations concernant un actionnement d'un volant de direction et d'un accélérateur et d'un frein par l'utilisateur ;
une étape d'enregistrement d'informations d'expérience consistant à gérer une base de données d'informations d'expérience qui stocke, dans une table d'informations d'état (300), les informations d'état faisant partie des informations de reconnaissance d'état et, dans une table d'informations d'expérience (400), des informations d'expérience représentant des informations obtenues à partir des informations d'actionnement concernant une méthode de commande pour le véhicule circulant le long d'un itinéraire pendant une conduite manuelle avec un actionnement manuel, les informations d'état et les informations d'expérience étant stockées en étant associées ;
une étape de recherche d'informations d'expérience consistant à effectuer une recherche dans la base de données d'informations d'expérience en utilisant les informations d'état faisant partie des informations de reconnaissance d'état à titre de clé de recherche, et à extraire de la base de données d'informations d'expérience les informations d'expérience correspondant à la clé de recherche ;
une étape de jugement de commande consistant à :
- juger si une circulation par conduite autonome est estimée possible ou non sur la base au moins des informations d'expérience extraites dans l'étape de recherche d'informations d'expérience ;
- annuler la circulation par conduite autonome si la circulation par conduite autonome est jugée impossible ; et
- calculer une méthode de commande pour la circulation par conduite autonome sur la base des informations d'expérience extraites dans l'étape de recherche d'informations d'expérience, et sortir des informations de méthode de commande concernant la méthode de commande calculée si la circulation par conduite autonome est jugée possible ; et
une étape d'exécution de commande consistant à mettre en oeuvre la circulation par conduite autonome en actionnant le véhicule sur la base des informations de méthode de commande qui sont un résultat de traitement de l'étape de jugement de commande,
dans lequel, dans l'étape d'enregistrement d'informations d'expérience, pendant une période temporelle après annulation de la circulation par conduite autonome dans l'étape de jugement de commande jusqu'à ce qu'il soit jugé alors que la circulation par conduite autonome est possible, les informations d'expérience sont enregistrées dans la base de données d'informations d'expérience en associant les informations d'expérience aux informations d'état.

8. Procédé d'assistance à la conduite autonome selon la revendication 7,
dans lequel la base de données d'informations d'expérience stocke les informations d'état faisant partie des informations de reconnaissance d'état et les informations d'expérience en associant les informations d'état aux informations d'expérience, et stocke également les informations d'expérience en associant les informations d'expérience au nombre d'enregistrements des informations d'expérience ; et
dans lequel, dans l'étape de recherche d'informations d'expérience, de la recherche dans la base de données d'informations d'expérience en utilisant les informations d'état à titre de clé de recherche, les informations d'expérience sur la base du nombre d'enregistrements sont extraites de la base de données d'informations d'expérience à titre d'informations d'expérience correspondant à la clé de recherche.

9. Procédé d'assistance à la conduite autonome selon la revendication 7,
dans lequel les informations de reconnaissance périphérique incluent des informations indiquant une position basée sur une voie du véhicule à titre d'informations d'état ;
dans lequel la base de données d'informations d'expérience stocke les informations indiquant la position basée sur la voie du véhicule à titre d'informations d'état faisant partie des informations de reconnaissance d'état ; et
dans lequel, dans l'étape de recherche d'informations d'expérience, une recherche est effectuée dans la base de données d'informations d'expérience en utilisant les informations indiquant la position basée sur la voie du véhicule à titre de clé de recherche, et les informations d'expérience correspondant à la clé de recherche sont extraites de la base de données d'informations d'expérience.

10. Procédé d'assistance à la conduite autonome selon la revendication 7,
dans lequel les informations de reconnaissance périphérique incluent des informations qui concernent un véhicule précédent du véhicule à titre d'informations d'état, et incluent des informations concernant une position de véhicule précédent indiquant une position du véhicule précédent relativement au véhicule, et des informations concernant un état de véhicule précédent indiquant un état de circulation du véhicule précédent ;
dans lequel la base de données d'informations d'expérience stocke les informations concernant la position du véhicule précédent et les informations concernant l'état du véhicule précédent à titre d'informations d'état faisant partie des informations de reconnaissance d'état ; et
dans lequel l'unité de recherche d'informations d'expérience est configurée pour effectuer une recherche dans la base de données d'informations d'expérience en utilisant les informations concernant la position du véhicule précédent et les informations concernant l'état du véhicule précédent à titre de clé de recherche, et extrait de la base de données d'informations d'expérience les informations d'expérience correspondant à la clé de recherche.

11. Procédé d'assistance à la conduite autonome selon la revendication 7, dans lequel la base de données d'informations d'expérience est montée dans le véhicule qui met en oeuvre la circulation par conduite autonome.

12. Procédé d'assistance à la conduite autonome selon la revendication 7, dans lequel la base de données d'informations d'expérience est située dans un centre de données couplé au véhicule, qui met en oeuvre la circulation par conduite autonome, via un réseau de communication.
